# EUROPEAN PATENT APPLICATION

(11) **EP 0 965 257 A2**
(43) Date of publication of application: **22.12.1999**
(21) Application number: 99110368.0
(22) Date of filing: 28.05.1999
(51) Int. Cl.: A01B 33/06

(54) **Harrow with box structure**

(30) Priority: 28.05.1998 IT PD980137
(71) Applicant: Maschio, Antonio, 35010 Campodarsego (Padova) (IT)
(72) Inventor: Maschio, Antonio, 35010 Campodarsego (Padova) (IT)
(74) Representative: Gustorf, Gerhard, Dipl.-Ing.

(57) **Abstract**

The device is an agricultural harrow with a plurality of vertical rotating shafts, made up of elements of sectional plate and joined so as to compose a tubular box structure with tubular supports for the rotating shafts, and provided, on the external surface, with one or two flanges, and inserted by forcing them into the top and bottom housings of the structure, so that they form an integral body with it, and fixed by means of structural adhesives and/or spot welding on a large surface, with consequent elimination or reduction of induced deformations. In this way a structure is obtained which is highly resistant to deformation and bending; the precision that may be obtained in the couplings, the alignments and the parallel arrangements is very high, thanks to the elimination of welds between the supports and the structure and therefore of deformations.

## Description

This patent refers to the sector of agricultural machinery and particularly concerns harrows for working the soil with a plurality of pairs of tools rotating on a vertical axis.

The most widespread execution comprises a box structure of sheet metal containing the drive parts, in which the supports of the shaft bearings are filled one on the bottom of the structure (tank bottom) and the other on the top (cover). This solution presents considerable drawbacks, such as the poor rigidity of the drive body and its ease of deformation.

No matter how much care is taken in tooling the supports, the result of their being fitted on this type of metal structure is poor precision of the whole due to lack of planarity and coaxiality. This imprecision leads to a considerable shortening of the working life of the components.

The manufacturers are therefore in search of suitable solutions to strengthen and improve the construction of said harrows.

One known solution contemplates a large support for both shaft bearings fitted on the bottom of the drive body; this ensures only the coaxiality of the bearings but not their rigidity, and it is very expensive.

Another solution contemplates a support completely welded onto the structure of the drive body which, besides causing welding deformations, does not solve the problem of the precision of the individual axis and of the whole system, but indeed it makes the situation worse.

This patent concerns a new chassis and respective new drive unit for agricultural harrows with a plurality of vertically rotating shafts, which solves the problems described above.

The new chassis comprises a box structure with sectional elements and tubular supports for the rotation shafts.

The sectional elements are shaped and joined so as to create a tubular box structure. The two sheet metal elements are housed one inside the other.

The external element has a general U section on which the horizontal rear wall has at its sides two almost vertical walls, while a bottom part may be partly inclined. The almost vertical side walls have the top edges bent outwards.

The internal element has a U section composed of a horizontal bottom wall with two vertical walls at the sides. The horizontal wall is as large as the distance between the vertical walls of the external element.

Substantially, the two elements, internal and external, are inserted and joined to one another in such a way as to constitute a single structure with a constant section, divided into a top box portion, with an open rectangular section, and a closed bottom box portion.

The top part containing the gears and lubricants is closed on assembly with a cover to protect it and to allow access for maintenance of the internal rotating unit.

The join between the internal and the external element of the tubular box structure and between the structure and the supports may be achieved by means of structural adhesives or electric spot welding with resistance or similar methods which do not cause deformation of the metal structure.

The tubular supports of the rotation shafts have a generally cylindrical shape with coaxial central hole.

The internal surface of the coaxial hole has housings for the rolling bearings.

The external surface of each tubular support has a flange near the top end and a restriction of the circumference with ring-shaped step near the opposite end.

Each tubular support is inserted, at the established centre distance, by forcing it between the internal and the external element of the tubular box structure, so that the flange rests on the bottom surface of the horizontal wall of the internal element and the ring-shaped restriction is inserted and forced into the seat provided in the horizontal wall of the external element.

The assembly of the internal and external elements of the tubular box structure together with the tubular supports of the shafts form a structure that is highly resistant to deformation and bending; the precision that may be obtained in the couplings, the alignments and the parallel arrangements is very high, thanks to the elimination of welds between the supports and the structure and therefore of deformations.

Agricultural harrow, with a plurality of vertical rotating shafts, made up of elements of sectional plate and joined so as to compose a tubular box structure with tubular supports for the rotating shafts, having a generally cylindrical shape with coaxial central hole and provided, on the external surface, with one or two flanges, fixed to the top wall and the bottom wall of the sectional elements by means of structural adhesives and/or spot welding on a large surface, with consequent elimination or reduction of induced deformations. These supports are inserted by forcing them into the top and bottom housings of the drive body (structure), so that they form an integral body with it.

The enclosed drawing presents a practical execution of the invention, as an example without intent of limitation.

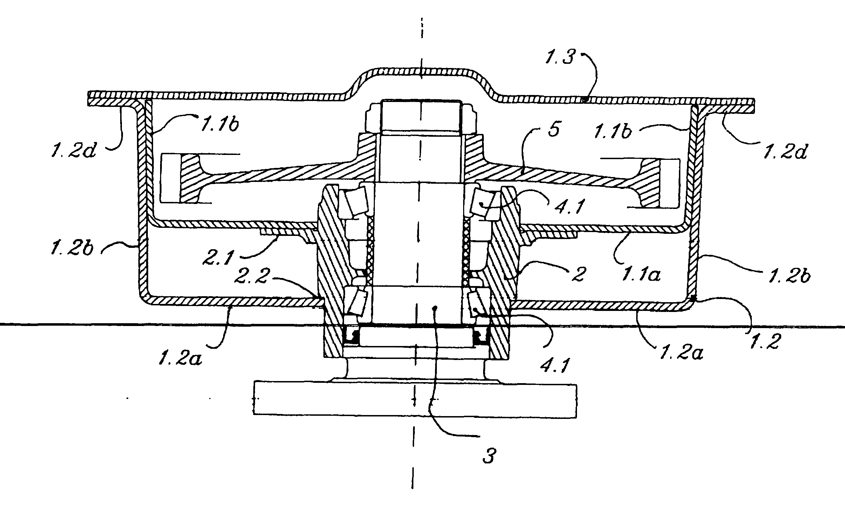

Figure 1 shows the vertical section of the application described above.

The two sectional elements (1.1, 1.2) are shaped and joined, one inside the other, so as to compose a box structure that is closed at the bottom and open at the top.

The external element (1.2) has a section composed of a horizontal wall (1.2a) at the bottom with two side walls (1.2b), the top edges of which (1.2d) are bent outwards. The internal element (1.1) has a section composed of a horizontal bottom wall (1.1a) with two vertical walls at the sides (1.1b).

A cover (1.3) is placed on the two elements (1.1, 1.2). The tubular supports (2) of the rotation shafts (3) have a generally cylindrical shape with a coaxial central hole inside which there are bearings (4.1, 4.2).

The external surface of each tubular support (2) has a flange (2.1) near one end and possibly another flange or a restriction of the circumference (2.2) close to the opposite end.

Each tubular support (2) is inserted, at the established centre distance, between the internal element (1.1) and the external element (1.2) of the tubular box structure, so that the flange (2.1) rests on the horizontal wall (1.1a) of the internal element (1.1) and the restriction (2.2) is inserted provided in the horizontal wall (1.2a) of the external element (1.2).

Inside the tubular support (2) there is the tool rotation shaft (3), the top end of which is joined to the cogged wheel (5) which transmits the rotating movement.

The above are the basic outlines of the invention, on the basis of which the technician will be able to put it into effect; any change which may be necessary upon implementation is to be regarded as completely protected by the present invention, provided that it is based on the same innovative concept described herein.

Therefore, with reference to the above description and to the attached drawing, the following claims are put forth.

## Claims

1. Agricultural harrow, with a plurality of vertical rotating shafts, made up of elements of sectional plate and joined so as to compose a tubular box structure with tubular supports for the rotating shafts, having a generically cylindrical shape with a coaxial central hole inside which are housed the tool shaft support bearings, characterized in that said tubular supports have one or two flanges on the external surface joined respectively to the top wall and to the bottom wall of the sectional elements.

2. Agricultural harrow according to claim 1, characterized in that the join is achieved by means of large contact surfaces between said flange(s) and said sectional elements with consequent elimination or reduction of induced deformations.

3. Agricultural harrow according to claims 1, 2, characterized in that said surfaces are fixed by means of structural adhesives and/or spot welding.

4. Agricultural harrow according to claim 2 or 3, characterized in that the support is inserted in the structure with sectional elements by forcing it into the housing provided in the sectional elements.
